# EUROPEAN PATENT SPECIFICATION

(11) **EP 0 351 736 B1**
(45) Date of publication and mention of the grant of the patent: **31.08.1994**
(21) Application number: 89112966.0
(22) Date of filing: 14.07.1989
(51) Int. Cl.: C08L 23/04, C08L 51/06, C08L 95/00

(54) **Compositions for water-proof sheets**
Zusammensetzungen für wasserbeständige Folien
Compositions de feuilles resistant à l'eau

(30) Priority: 18.07.1988 JP 177150/88
(43) Date of publication of application: 24.01.1990
(73) Proprietor: NIPPON UNICAR KABUSHIKI KAISHA, Tokyo (JP); Bridgestone Corporation, Tokyo 104 (JP)
(72) Inventor: Isobe, Kazuyuki, Tokyo (JP); Aizawa, Takao, Yokohama-shi Kanagawa-ken (JP); Yamaguchi, Noboru, Yokohama-shi Kanagawa-ken (JP); Ueda, Yutaka, Yokohama-shi Kanagawa-ken (JP)
(74) Representative: Schwan, Gerhard, Dipl.-Ing.

(56) References cited:
- EP-A- 0 223 019
- US-A- 4 722 961

## Description

### Field of the Invention

This invention relates to a composition for water-proof sheets suitable for use in water-proofing layers of concrete structures, and to a water-proof sheet comprising the composition.

### Background of the Invention

Asphalt is used in many fields because of its good flowability, adhesion, water-proof and its inexpensiveness and large reservoir. Good resistance of asphalts to exterior damages allows it to be used suitably in water-proof sheets.

But the water-proof sheet comprising only asphalt has so high temperature-sensitivity that the sheet becomes hard at low temperatures and thus becomes fragile and lowers its elongation. When cracks occur due to elongation and shrinkage of concrete, the asphalt covering the concrete as well breaks, and the concrete becomes useless. At high temperatures asphalt is softened and flows.

In order to overcome these disadvantages, there have been proposed many water-proof sheets made from compositions comprising various thermoplastic resins, rubber or others incorporated in asphalt. For example, Japanese Patent Publication No. 3417/1977 proposes a water-proof sheet made from a composition comprising 100 weight parts of a bitumen mainly containing blown asphalt, 10 - 40 weight parts of a styrene-butadiene rubber, 20 - 50 weight parts of short fibers and 1 - 5 weight parts of a polybutene. But expensive components, such as styrene-butadiene rubber, polybutene, etc., are uneconomically used in the composition. In addition, unpreferably styrene-butadiene rubber has poor heat-aging resistance.

Japanese Patent Laid-Open Publication No. 24348/1978 proposes a water-proof sheet made from a thermoplastic resin composition composed mainly of an atactic polypropylene having an average molecular weight of 3,000 - 50,000 and asphalt, the latter being contained in a proportion of 0.1 - 2 weight parts per weight part of the former. In the composition the atactic polypropylene has every two carbon atoms of its polymer bonded to a methyl group, i.e., tertiary carbon atom. The composition is very apt to be degraded by oxygen and heat.
Disadvantageously the water-proof sheet has poor durability.

Japanese Patent Laid-Open Publication No.73085/ 1976 proposes a resilient sheet material in the form of a sheet made from a composition which comprises an asphalt matrix comprising 100 - 200 weight parts of asphalt and 10 - 100 weight parts of a thermoplastic resin (e.g., polyethylene, polyamide, polypropylene, polyvinylacetate, polyvinylchloride, polyvinylidenechloride, ethylenevinyl acetate copolymer, petroleum resin, cumaroneindene resin, butene resin, polystyrene resin); 50 - 400 weight parts of a powdered vulcanized rubber; and 800 weight parts or less than 800 weight parts of a powdered mineral material having an average particle diameter equal to or smaller than 100µ, the latter two being distributed in the asphalt matrix. But the thermoplastic resin has such poor compatibility with asphalt that it cannot be homogeneously dispersed in the asphalt and even if dispersed, the resultant sheet material lacks stiffness, and is accordingly difficult to be handled and worked.

### Object of the Invention

An object of this invention is to provide a water-proof sheet and a composition for the water-proof sheet which has good heat-aging resistance, durability, weatherability and chemical resistance, does not break due to an external pressure exerted to the sheet, and has the so-called stiffness which provides easy handling and workability, and good adhesion.

The inventors of this invention have endeavored to overcome the above-described problems and found that in contrast to the resins, such as styrene-butadiene copolymer and atactic polypropylene, of the conventional water-proof sheet compositions, silicone grafted linear ethylene-α-olefin copolymers having a density equal to or less than 0.910 g/ml have good stiffness, heat-resistance, tensile strength, heat-aging resistance, and good compatibility with asphalt and inorganie fillers.

### Summary of the Invention

This invention relates to:
a composition for water-proof sheets and a water-proof sheet made from the composition, said composition comprising 100 weight parts of a silicone-grafted linear ethylene-α-olefin copolymer prepared by adding an unsaturated alkoxysilane and an organic peroxide to a linear ethylene-α-olefin copolymer having a density equal to or less than 0.910 g/ml; 10 - 200 weight parts of an asphalt, and 0.001 - 10 weight parts of a silanol condensation catalyst.

### Details of the Invention

In this invention, ethylene-α-olefin copolymer means the copolymer containing 50% or more, preferably 70% or more of ethylene, the α-olefin having 3 - 12 carbon atoms. The α-olefin may be linear or branched and is, for example, propylene, butene-1, pentene-1, hexene-1, heptene-1, octene-1, 4-methyl pentene-1, 4-methyl hexene-1 or 4,4-dimethyl pentene-1.

The ethylene-α-olefin copolymer is produced in the vapor phase using the so-called Ziegler catalyst produced by combining a transition metal compound of a metal in the IV to the VIII groups of the periodic table and an organometallic compound of a metal in the I to the III groups thereof. The ethylene-α-olefin copolymer can be produced at a lower temperature and under a lower pressure compared with the conventional high-pressure polyethylene.

More specifically, the linear ethylene-α-olefin copolymer used in this invention is produced by the process for continuously producing ethylene copolymer described in Japanese Patent Laid-Open Publication No. 230011/1984, in which process a gas mixture containing a) at least one of higher α-olefins having 3 - 8 carbon atoms and ethylene in a mol ratio of 0.35:1 - 8.0 : 1, and b) at least 25 mol% of at least one of diluting gases is continuously contacted in a fluid bed reaction zone, at a temperature of 10° - 80°C and under a pressure equal to or lower than 7,000 KPa with a particle catalyst comprising a precursor composition having the formula

MgₘTi(OR)ₙXₚ[ED]_{q}

(where R is an aliphatic or aromatic hydrocarbon group having 1 - 14 carbon atoms, or COR′ in which R′ is an aliphatic or aromatic hydrocarbon group having 1 - 14 carbon atoms , X is one of Cl, Br, I and their mixtures, ED is an organic electron donating compound selected from aliphatic or aromatic alkyl esters, aliphatic ethers cyclic ethers and aliphatic ketones, m is 0.5 - 56, n is 0.1 or 2, p is 2 - 116 and q is 2 - 85), the precursor compound is diluted with an inert carrier material, while completely activated by an organic aluminium compound, and the activated compound is used in such a quantity that total quantities of the aluminium and titanium in the reaction zone are in a mol ratio of 10:1 - 400:1.

Also more specifically, the linear ethylene-α-olefin copolymer used in this invention is produced by the process described in Japanese Patent Laid-Open Publication No.230006/1984 in which process ethylene monomers singly or together with at least one of α-olefin having 3 - 10 carbon atoms are polymerized by being contacted in the vapor phase and at a temperature of 10°C - 115°C with a catalyst composition comprising:
A) a carried precursor comprising:
   1) a vanadium compound, a reaction product between a) vanadium trihalide of chlorine, bromine and iodine and b) an electron donator, an organic Lewis base in which the vanadium trihalide is soluble,
   2) a modifier having the formula

      MXₐ

      (where M is boron or AlR₍₃₋ₐ₎, each R being alkyl and having a total number of aliphatic carbon atoms not exceeding 14, X is chlorine, bromine or iodine, a is 0, 1 or 2 but 3 when M is boron);
B) a co-catalyst having the formula

   AlR₃

   (where R is as defined above); and
C) an accelerator having the formula

   R′_{b}CX′_{(4-b)}

(where R′ is hydrogen, or an unsubstitutcd or halogen-substituted lower alkyl, X′ is halogen, and b is 0, 1 or 2).

The asphalt used in this invention comprises, as its main component, an oily hydrocarbon called medium or marten, and the term "asphalt" means a protective substance called asphalt resin, bitumen comprising colloidal or ultrafine carbon particles, and natural asphalt and petroleum asphalt. The natural asphalt is exemplified by asphaltite such as gilsonite, glulmite, glance pitch; lake asphalt such as Trinidad asphalt, and rock asphalt.

As the petroleum asphalt are used a straight asphalt produced by distilling a crude oil, a blown asphalt produced by blowing oxygen into straight asphalt in the presence or absence of a catalyst, an asphalt produced by deasphalting a fraction containing asphaltic substances with a solvent such as propane, or a cut-back asphalt produced by mixing a straight asphalt with a volatile petroleum. The asphalt which is preferable to this invention is the so-called asphalt compound. It is preferable that asphalt compound has a high hardness and high softening point. The most preferable asphalt has a penetration of a loaded needle of 10 - 30 (measured at 25°C, under a load of 100g and for 5 seconds in accordance with JIS K 2530), a softening point of 85 - 120°C (measured in accordance with JIS K 2531), and a melt viscosity of 40 - 70 C.P. (measured at 250°C in accordance with JIS K 6381). The silicone-grafted linear ethylene-α-olefin copolymer used in this invention is produced by generating free radicals in the linear ethylene-α-olefin copolymer using an organic peroxide at a temperature higher than the melting point of the linear ethylene-α-olefin copolymer and reacting an unsaturated alkoxysilane expressed by the formula RR′SiY₂ with the free radicals.

In the formula RR′SiY₂ expressing the alkoxysilane, R is an aliphatically unsaturated hydrocarbon group or hydrocarbonoxy group which is reactive with the free radicals generated in the polyolefin.

The group is exemplified by vinyl, alkyl, butenyl, dichlohexenyl, and cyclopentadienyl. Among them vinyl group is more preferable. Y is an alkoxy group, e.g., a methoxy, ethoxy or butoxy group.
R′ is a monovalent hydrocarbon group having no olefin unsaturation, e.g., Y group or hydrogen. γ-methaacryloyl oxypropyl trimethoxysilane, vinyl trimethoxysilane, and vinyl trimthoxysilane are the most preferable silanes. The silane is used in an amount of 0.5 - 10 weight parts based on the weight of the polyolefin.

The organic peroxide used in this invention is exemplified by dicumyl peroxide, di-t-butyl peroxide and 2,5-di(peroxide benzoate)hexine-3. The organic peroxide is used in an amount of 0.01 - 2.0 weight parts based on the weight of the polyolefin.

According to this invention, the asphalt is mixed in an amount of 10 - 200 weight parts to 100 weight parts of the silicone-grafted linear ethylene-α-olefin copolymer. The addition of the asphalt in an amount of below 10 weight parts results in poor fabricability and adhesion, and disadvantageous economy. Its addition in an amount of above 200 weight parts results in poor resistance to cracks in an under layer on a sheet, adhesion, heat resistance, handling and workability. The so-called stiffness of the sheet material lacks, and undesirably blocking is apt to occur.

The silanol condensation catalyst used in this invention acts as a catalyst for accelerating the dehydrating condensation among silanols of silicone. The silanol condensation catalyst is exemplified by dibutyl tindilaurate, dibutyl tindiacetate, dibutyl tinoctoate, tin(I)acetate, naphthenate cabalt, ethyl amine, and dibutyl amine. The silanol condensation catalyst may be added to the silane-grafted ethylene-α-olefin copolymer or the asphalt when a sheet is formed. The silanol condensation catalyst is used in an amount of 0.001 - 10 weight parts, preferably 0.1 - 5 weight parts, based on the weight of the polyolefin.

The composition for water-proof according to this invention may contain various auxiliary materials used in the usually known resin compositions and asphalt compositions. The auxiliary materials are exemplified by a stabilizer, antioxidant, filler, coloring agent, carbon black, crosslinking agent, lubricant, fabrication modifier, and antistatic agent. Especially the addition of an inorganic filler to the composition of this invention reduces costs, and provides flame retardency and preferably the so-called stiffness of the sheet.

The addition of an inorganic filler to the thermoplastic resins other than the linear ethylene-α-olefin copolymer results in its poor distribution and resultantly inhomogeneous kneading with the resin components.

The linear-α-olefin copolymer according to this invention having a density equal to or less than 0.910g/ml and produced in the vapor phase and by the low-pressure process has a unique property which allows the copolymer to accommodate a large quantity of an inorganic filler. The inorganic filler is significant as one component in the composition for water-proof sheets according to this invention.

The silane-grafted ethylene-α-olefin copolymer, which contains alkoxysilane groups reactive with hydroxyl groups on the surface of an inorganic filler, better accommodates an inorganic filler. The addition of an inorganic filler is more preferable.

The inorganic filler used in this invention is e.g. calcium carbonate, barium sulfate, talc, mica, calcium silicate, aluminium hydroxide, magnesium hydroxide, or glass fiber.

The composition for water-proof sheets of this invention is formed into a sheet of a required thickness by kneading its components with a sufficient shearing force at a usual temperature of 80° - 200°C e.g. by a Banbury mixer, press kneader, twin-screw extruder, Buss Ko-kneader Henschel mixer, or roll kneader, and spreading the kneaded result between rollers with cooling.

It is preferable to apply an adhesive or a coating to one side of a formed sheet whereby the adhesiveness to concrete is imparted. The adhesive is, for example, vinyl acetate paste, vinyl acetate emulsion, acryl emulsion, or asphalt adhesives, but is not limited to the above as long as the adhesive is adhesive to concrete.

### Example 1

100 weight parts of a silicone grafted linear ethylene-α-olefin copolymer having a density of 0.900 g/ml and a melt index of 0.8 g/10 minutes (DFDA-1137, made by Nippon Unicar), and 15 weight parts of a straight asphalt (penetration of a loaded needle: 60/80, made by Showa Shell Sekiyu) were kneaded by a Banbury mixer at 140°C for 10 minutes, and then the mixture was pelletized. The pellets were formed by a heat press forming machine at 140°C, under a pressure of 100 Kg/m² and for 2 minutes into a sheet having a thickness of 1.0 mm, a length of 150 mm and a width of 180 mm. The sheet was punched into dumb-bell type test specimens stipulated by JIS K 6760. These specimens were measured for tensile strength and elongation at a tensile speed of 100 mm/minute.
The sheet was punched by a C die into specimens. These specimens were measured in accordance with ASTM D 638 for stiffness as the flexibility of the sheet.

The silicone-grafted copolymer and silanol condensation catalyst master batch were prepared as follows. The two were mixed in a ratio of 100:10 before the specimens were formed. The specimens were treated with boiled water for 2 hours for the water crosslinking.

### Preparation of silicone-grafted copolymer

100 weight parts of a particulate linear ethylene-α-olefin copolymer having a density of 0.900 g/ml and a melt index of 0.8 g/10 minutes (DFDA-1137 made by Nippon Unicar), and 0.15 weight parts of dicumyl peroxide, and 2.0 weight parts of vinyl trimethoxysilane were mixed by a mixer until the particles were covered completely with the silane. Then the mixture was extruded through a 65mm⌀ extruder to produce a silane-grafted copolymer. The extruder had sections divided according to the following temperatures.

| | |
|---|---|
| Cylinder feed section | 120°C |
| Cylinder compression section | 150°C |
| Cylinder measuring section | 180°C |
| Screw rotational speed 30 rotations/min. Screw discharge amount 30 kg/hour | |

### Preparation of silanol condensation catalyst

One weight part of dibutyl tintraulate was added to 100 weight parts of a high-pressure polyethylene having a density of 0.920 g/ml and a melt index of 1.3 g/10 minutes (DND-2450 made by Nippon Unicar) and extruded by the above-mentioned 65-mm⌀ extruder to prepare a master batch.

### Example 2

The same tests as in Example 1 were made in Example 2 except that 50 weight parts of magnesium peroxide (CUMA 5A made by Kyowa Kagaku) were added to the components of Example 6.

### Comparative Examples 1, 2, 3 and 6

The same tests as in Example 1 were made in Comparative Examples 1, 2, 3 and 6 except that a high-pressure polyethylene, ethylene-α-olefin copolymer having a density of 0.910 g/ml (NUCG-5361, M1:4.0, density: 0.934), a styrene-butadiene rubber, and atactic polypropylene were used in the respective comparative examples.

### Comparative Example 4

The same tests as in Comparative Example 3 were made except that an asphalt was added by 50 weight parts in place of 35 weight parts.

### Comparative Example 5

The same tests as in Comparative Example 3 were made in Comparative Example 5 except that 50 weight parts of magnesium peroxide (CUMA 5A made by Kyowa Kagaku) were added to the components of Comparative Example 3.

### Comparative Example 7

The same tests as in Comparative Example 6 were made in Comparative Example 7 except that a straight asphalt was added by 50 weight parts instead of 15 weight parts of Comparative Example 6.

### Comparative Example 8

The same tests as in Comparative Example 6 were made in Comparative Example 8 except that 50 weight parts of magnesium peroxide (CUMA 5A made by Kyowa Kagaku) were added to the components of Comparative Example 6.

As evident in the Examples, the water-proof sheet made from asphalt and silicone-grafted ethylene-α-olefin copolymer having a density equal to or less than 0.910 g/ml is more effective compared with the conventional water-proof sheet in tensile strength, elongation, stiffness, etc. Especially the water-proof sheet of this invention further comprising an inorganic filler is far more effective compared with the conventional water-proof sheet containing the inorganic filler.

**Table 1**

| Examples | | | | Comparative examples | | | | | | | |
|---|---|---|---|---|---|---|---|---|---|---|---|
| | | 1 | 2 | 1 | 2 | 3 | 4 | 5 | 6 | 7 | 8 |
| Resin component | *1 | 100 | 100 | | | | | | | | |
| | *2 | | | 100 | | | | | | | |
| | *3 | | | | 100 | | | | | | |
| | *4 | | | | | 100 | 100 | 100 | | | |
| | *5 | | | | | | | | 100 | 100 | 100 |
| Asphalt component | *6 | 35 | 35 | 35 | 35 | 35 | 50 | 15 | 15 | 50 | 15 |
| Inorganic component | *7 | | 50 | | | | | 50 | | | 50 |
| Appreciation | *8 | 85 | 80 | 40 | 50 | 40 | 35 | 35 | 20 | 15 | 10 |
| | *9 | 560 | 380 | 210 | 250 | 230 | 260 | 150 | 250 | 200 | 210 |
| | *10 | 450 | 700 | 400 | 550 | 200 | 165 | 250 | 180 | 150 | 210 |
| *1 Silicone-grafted ethylene-α-olefin copolymer having a density equal to or less than 0.910 g/ml *2 High-pressure polyethylene *3 Ethylene-α-olefin copolymer having a density of 0.934 (NUCG-5361) *4 Stylene-butadiene rubber *5 Atactic polypropylene *6 Straight asphalt *7 Magnesium peroxide *8 Tensile strength (Kg/cm²) *9 Elongation (%) *10 Stiffness of the sheets (Kg/cm²) | | | | | | | | | | | |

## Claims

1. A composition for water-proof sheets, comprising 100 weight parts of a silicone-grafted linear ethylene-α-olefin copolymer prepared by adding an unsaturated alkoxysilane and an organic peroxide to a linear ethylene-α-olefin copolymer having a density equal to or less than 0.910 g/ml; 10 - 200 weight parts of an asphalt; and 0.001 - 10 weight parts of a silanol condensation catalyst.

2. A water-proof sheet made from a composition according to Claim 1.

## Patentansprüche

1. Zusammensetzung für wasserbeständige Folien mit 100 Gewichtsteilen eines mit Silicon gepfropften linearen Ethylen-α-Olefinkopolymers, das dadurch hergestellt ist, daß ein ungesättigtes Alkoxysilan und ein organisches Peroxid einem linearen Ethylen-α-Olefinkopolymer zugesetzt werden, das eine Dichte von 0,910 g/ml oder weniger hat; mit 10 bis 200 Gewichtsteilen eines Asphalts und mit 0,001 bis 10 Gewichtsteilen eines Silanolkondensationskatalysators.

2. Wasserbeständige Folie aus einer Zusammensetzung nach Anspruch 1.

## Revendications

1. Composition pour des feuilles étanches à l'eau, comprenant 100 parties en poids d'un copolymère éthylène-α-oléfine linéaire greffé avec une silicone, préparé par addition d'un alkoxysilane insaturé et d'un peroxyde organique à un copolymère éthylène-α-oléfine linéaire ayant une masse volumique égale ou inférieure à 0,910g/ml; 10 à 200 parties en poids d'un asphalte ; et 0,001 à 10 parties en poids d'un catalyseur de condensation du type silanol.

2. Feuille étanche à l'eau produite à partir d'une composition suivant la revendication 1.
